# EUROPÄISCHE PATENTANMELDUNG

(11) **EP 1 364 697 A1**
(43) Veröffentlichungstag der Anmeldung: **26.11.2003**
(21) Anmeldenummer: 03011521.6
(22) Anmeldetag: 21.05.2003
(51) Int. Cl.: B01D 53/02, C01B 21/04, C01B 23/00, B01J 20/06, B01J 23/755

(54) **Nickelhaltige Gasreinigungsmasse und Verfahren zur Reinigung von einem Gas oder kälteverflüssigtem Gas unter Verwendung der Reinigungsmasse**

(30) Priorität: 23.05.2002 DE 10224802
(71) Anmelder: Messer Griesheim GmbH, 65933 Frankfurt am Main (DE)
(72) Erfinder: Hilscher, Willi, 45485 Wesel (DE)

(57) **Zusammenfassung**

Die Reinigungsmasse zur Entfernung von Sauerstoff, Wasserstoff, Kohlenmonoxid und/oder Kohlendioxid aus einem Gas oder kälteverflüssigten Gas enthält Nickel und eine Trägermasse, wobei der Nickelgehalt, berechnet als Metall, mehr als 5 Massenprozent bezogen auf die Gesamtmasse der Reinigungsmasse beträgt. Ein Verfahren zur Reinigung von einem Gas oder kälteverflüssigten Gas unter Verwendung der Reinigungsmasse. Die Verwendung der Reinigungsmasse zur Nachreinigung von Gas oder kälteverflüssigten Gas.

## Beschreibung

Die Erfindung betrifft eine Reinigungsmasse zur Entfernung von Beimengungen eines oder mehrerer Gase, insbesondere Beimengungen von Sauerstoff, Wasserstoff, Kohlenmonoxid und/oder Kohlendioxid, aus einem Gas oder kälteverflüssigten Gas.

Zur Gasnachreinigung werden Absorptionsmassen verwendet, mit denen Gase oder Gasgemische von Verunreinigungskomponenten befreit werden, die für die spätere Anwendung hinderlich sind. Die Gasnachreinigung wird beispielsweise in Analysenlabors eingesetzt, wo besonders reine Gase als Betriebsgase für Laborgeräte oder als Kalibriergase verwendet werden.

In der DE 16 67 129 C3 (interne Bezeichnung MG 434) wird eine Masse zur Entfernung von Verunreinigungen wie Sauerstoff, Stickoxid, Halogenwasserstoff aus Gasen beschrieben, die aus einer aktiven eisen-, nickel-, rhenium-, vorzugsweise titan-, mangan-, vanadium, molybdän- und/oder chromhaltigen Komponente auf einem wärmebeständigen oxidischen Träger mit großer Oberfläche besteht. Der Metallgehalt der Masse liegt im Bereich von 1 bis 5 Gew.-%.

Der Erfindung liegt die Aufgabe zugrunde, eine leistungsfähige, alternative Absorptionsmasse, insbesondere zur Entfernung Verunreinigungen aus Sauerstoff, Wasserstoff, Kohlenmonoxid, Kohlendioxid aus Gasen, bereitzustellen.

Gelöst wurde die Aufgabe durch eine Reinigungsmasse mit den in Anspruch 1 beschriebenen Merkmalen.

Die Reinigungsmasse ist im allgemeinen eine Adsorbermasse oder Absorbermasse zur Entfernung von Verunreinigungen oder Beimengungen von einem oder mehreren Gasen, die zu einer adsorptiven oder absorptiven Wechselwirkung mit nickelhaltigen Materialien befähigt sind, aus einem Gas oder kälteverflüssigten Gas. Das zu reinigende Gas sind Gase mit einer Gasart als Hauptkomponente oder Gasgemische, wobei die als Hauptkomponente betrachteten Gaskomponenten in der Regel mehr als 1 Vol.-%, insbesondere mehr als 10 Vol.-%, in dem Gasgemisch betragen. Beimengungen oder Verunreinigungen sind in der Regel eine oder mehrere Gaskomponenten mit einem Volumenanteil von jeweils weniger als 1 Vol.-%, insbesondere weniger als 0,1 Vol.-%, des Gases oder Gasgemisches insgesamt. Die Verunreinigungen oder Beimengungen sind insbesondere Sauerstoff, Wasserstoff, Kohlenmonoxid und/oder Kohlendioxid. Der Gehalt von Sauerstoff in dem zu reinigenden Gas oder dem kälteverflüssigten Gas sollte vorteilhaft unter 50 ppm (ppm: 1 Volumenteil auf 10⁶ Volumenteile) liegen. Die Angaben der Volumenanteile der Gase beziehen sich auf Normalbedingungen, das heißt 20 °C, 1 bar absolut. Die Angabe des Gehaltes von Beimengungen eines oder mehrerer Gase in einem kälteverflüssigten Gas beziehen sich ebenso auf Normalbedingungen, das heißt einem in ein entsprechendes Gas bei Normalbedingungen überführten kälteverflüssigten Gases.

Die Reinigungsmasse für Gase oder kälteverflüssigte Gase wird auch als Gasreinigungsmasse bezeichnet. Zu reinigende Gase oder kälteverflüssigte Gase sind insbesondere Stickstoff, Inertgase oder Inertgasgemische, Edelgase wie Helium, Argon, Krypton, Xenon oder Edelgasgemische.

Die Reinigungsmasse für Gase oder kälteverflüssigte Gase wird vorzugsweise zur Gasnachreinigung eingesetzt.

Die Reinigungsmasse besteht vorzugsweise aus Nickel und/oder einer oder mehreren nickelhaltigen Verbindungen, insbesondere Nickeloxide, auf einem Träger.

Die Reinigungsmasse besteht z.B. aus 10 bis 80 Massenprozent, vorzugsweise 30 bis 80 Massenprozent, besonders bevorzugt 40 bis 70 Massenprozent, insbesondere 50 bis 70 Massenprozent Nickel und/oder einer nickelhaltigen Verbindung und dem restlichen Anteil aus dem Träger, wobei die Anteile von Nickel und/oder einer nickelhaltigen Verbindung und Träger zusammen 100 Massenprozent ergeben. Die besonders bevorzugte Reinigungsmasse enthält 40 bis 70 Massenprozent Nickel (berechnet als Metallgehalt), insbesondere 60 bis 70 Massenprozent Nickel (berechnet als Metallgehalt), wobei metallisches Nickel und Nickeloxid oder Nickeloxide nebeneinander vorliegen.

Träger oder Trägermassen sind z.B. Aluminiumoxid, Zirkonoxid, Kieselgel, Kieselgur, synthetische oder natürliche Zeolithe, Aktivkohle. Bevorzugter Träger ist ein Siliziumdioxidträger. Die Trägermassen werden beispielsweise durch Fällung von Salzen, insbesondere Oxiden, von Silizium, Aluminium oder Zirkonium hergestellt. Es werden auch Gemische der Salze bei der Fällung eingesetzt, z.B. von Silizium und Aluminium, von Silizium und Zirkonium, von Aluminium und Zirkonium oder von Silizium, Aluminium und Zirkonium. Bei der Fällung sind vorzugsweise Nickelsalze vorhanden, so daß auch diese gefällt werden. Die Präzipitate enthalten somit vorzugsweise Nickel.

Als Reinigungsmasse erwiesen sich insbesondere nickelhaltige Massen mit einem Träger als geeignet, die als Hydrierkatalysatoren z.B. in der organischen Synthese eingesetzt werden. Die Herstellung solcher Hydrierkatalysatoren wird beispielsweise in der EP 98681 A1, der DD 152065, der EP 335 222 A1, der US 2564331, der EP 672452 A1, der DE 19909176 A1 und der DE 19909177 A1 beschrieben, worauf hiermit Bezug genommen wird.

Bevorzugte Reinigungsmasse sind Gemische von Nickel und Nickeloxid auf einem Siliziumdioxidträger. Besonders geeignet erwies sich der unter der Bezeichnung "Leuna-Katalysator Kontakt 6513 S" erhältliche Hydrierkatalysator (Hersteller: KataLeuna GmbH). Dieser Hydrierkatalysator hat einen Nickelgehalt, berechnet als Nickel, von ca. 60 bis 70 Masse-%. Beispielsweise hat der Hydrierkatalysator einen Nickelgehalt von ca. 60 Masse-%, Rest Siliziumdioxid bzw. Silica. Die Dichte (Bulk density) des Hydrierkatalysators beträgt z.B. 850 bis 1150 kg/m³. Die BET-Oberfläche des Hydrierkatalysators ist z.B. 180 bis 240 m²/g. Das Porenvolumen des Hydrierkatalysators ist z.B. 0,25 bis 0,45 cm³/g. Der Extrudat-Durchmesser des Hydrierkatalysators ist z.B. um 1,6 mm. Der Gehalt von Nickel neben Nickeloxid ist durch Reduktion gezielt veränderbar. Die Reduktion erfolgt z.B. bei 100 °C im Wasserstoffstrom (Behandlungsdauer z.B. 1 Stunde). Vorteilhaft liegt der Reduktionsgrad der Reinigungsmasse über 50 %, vorzugsweise über 60 %. Sehr vorteilhaft ist ein Reduktionsgrad der Reinigungsmasse im Bereich von 50 bis 90%, vorzugsweise im Bereich von 60 bis 80%, insbesondere im Bereich von 65 bis 80%.

Vorteilhaft enthält die Reinigungsmasse Kristallite von Nickel. Die Reinigungsmasse enthält beispielsweise eine monomodale oder bimodale Nickelkristallitgrößenverteilung. Die Herstellung solcher Massen mit monomodaler Nickelkristallitgrößenverteilung ist in der DE 199 09 177 A1, mit bimodaler Nickelkristallitgrößenverteilung in der DE 199 09 176 A1 beschrieben, worauf hiermit jeweils Bezug genommen wird.

Die Reinigungsmasse wird als Pulver, Granulat oder Formlinge (z.B. Extrudat) eingesetzt.

Die Reinigungsmasse wird mit Vorteil für die Mehrfachkomponenten-Nachreinigung von Gasen oder kälteverflüssigten Gasen eingesetzt. Gegenüber üblichen Reinigungsmassen ist die Kapazität erhöht, z.B. ergibt sich eine etwa zehnfach höhere Sauerstoffkapazität bei gleichzeitiger Entfernung von Kohlenmonoxid, Kohlendioxid und Wasserstoff (z.B. aus Stickstoffgas).

Die Reinigungsmasse wird vorteilhaft in Patronen (Gaspatronen) für Gasdurchfluß eingesetzt, sehr vorteilhaft in Kombination mit einer Indikatormasse oder Indikatorpatrone, wie in der DE 100 30 831 A1 beschrieben ist und worauf hiermit Bezug genommen wird.

Die Herstellung verschiedener nickelhaltiger Reinigungsmassen ist in den Beispielen 1 bis 7 beschrieben, die aus der DE 199 09 177 A1 und der DE 199 09 176 A1 entnommen wurden, wo es um die Herstellung von Hydrierkatalysatoren geht.

### Beispiel 1 (aus DE 199 09 177 A1)

4,5 l Wasser werden in einen mit einem Rührer versehenen, beheizbaren Fällbehälter vorgelegt und anschließend eine Natriumbicarbonatlösung, die durch Lösen von 1,5 kg NaHCO₃ in 10 l Wasser hergestellt wurde, und eine Wasserglaslösung (45 g SiO₂ = 0,75 l Lösung) zugegeben. Danach wird unter Rühren auf eine Fälltemperatur von 85°C aufgeheizt und mit der Dosierung einer vereinigten Metallnitratlösung, die neben 400 g Nickel auch 158 g ZrO₂ und 27 g HfO₂ in Form der Nitrate enthielt, begonnen. Die Fällzeit bei einer durchschnittlichen Temperatur von 80-85°C betrug ca. 2 h. Der pH-Wert nach der Fällung lag bei 8,2-8,5. Nach Abschluß der Fällung wurde die fertige Suspension noch ca. 2 h bei 80°C nachgerührt. Im Anschluß daran wird die Suspension filtriert und der Filterkuchen bis zu einem Na₂O-Gehalt von < 0,3 Masse-%, bezogen auf den Glührückstand des bei 800°C getemperten Produkts, mit alkalifreiem Wasser gewaschen. Danach wird der Filterkuchen ca. 14 h bei Temperaturen von 120 bis 150°C getrocknet und nachfolgend 2 h bei 370°C calciniert. Nach der Calcinierung wird das Zwischenprodukt im Stickstoffstrom (1000 v/v h) inertisiert, im Wasserstoffstrom (1000 v/v h) mit einer Aufheizrate von 5°C/min auf 460°C hochgeheizt und 6 h bei 460°C reduziert. Anschließend wurde 30 Minuten bei 460°C im Stickstoffstrom mit 1500 v/v h inertisiert, danach im Stickstoffstrom (1500 v/v h) auf 290°C abgekühlt, bei dieser Temperatur wird dem Stickstoff Kohlendioxid in einer solchen Menge zugesetzt, daß die CO₂-Konzentration 2 Vol-% beträgt.

Der Katalysator wird mit diesem Gemisch 30 Minuten bei 280°C behandelt, nachfolgend im gleichen Gasgemisch auf 50°C abgekühlt und in einem Stickstoffstrom (1500 v/v h) mit einem Sauerstoffgehalt von 0,1 bis 1 Vol-% und einem C0₂-Gehalt von 0,6 Vol-% bei Temperaturen unterhalb 80°C stabilisiert. Die Sauerstoffkonzentration wurde so gewählt, daß die Katalysatortemperatur 80°C nicht überstieg. Die Stabilisierungszeit bei Temperaturen < 80°C betrug 5 h.

Der reduzierte und stabilisierte Katalysator enthält ca. 50 Masse-% Nickel, 20 Masse-% ZrO₂, 5 Masse-% SiO₂ und 3 Masse-% HfO₂.

### Beispiel 2 (aus DE 199 09 177 A1 )

4,5 l Wasser werden in den beheizbaren Fällbehälter vorgelegt und anschließend eine Metallnitratlösung, die neben 400 g Nickel auch Zirconium und Hafnium in Form einer Nitratlösung enthält, zugegeben. Das Molverhältnis von Nickel zu ZrO₂ in der Metallnitratlösung beträgt ca. 2, das Molverhältnis ZrO₂ zu HfO₂ ca. 25. Nach der Zugabe der Metallnitratlösung wird unter Rühren auf eine Temperatur von 60°C aufgeheizt und anschließend mit einer wäßrigen Sodalösung (150 g Soda/l Lösung) bis zum End-pH-Wert von ca. 8,5 gefällt. Die Fällzeit betrug ebenfalls ca. 2 h. Nach Abschluß der Fällung wurde bei Temperaturen von 60- 70°C nachgerührt, anschließend filtriert und weiter, wie unter Beispiel 1 beschrieben, bearbeitet.

Der fertige Katalysator enthält ca. 40 Masse-% Nickel, 40 Masse-% ZrO₂ und 3 Masse-% HfO₂.

### Beispiel 3 (aus DE 199 09 177 A1 )

305,76 g Ni(NO₃)6H₂O und 29, 52 g Al(NO₃)₃ 9H₂O werden in 1760 ml destilliertem Wasser und 2,32 g Zirconcarbonat in 9 ml HNO₃ (56 Masse-%) gelöst. Beide Lösungen werden vereinigt und auf 101°C erhitzt. Diese Mischsalzlösung wird innerhalb von 3 Minuten gleichmäßig zu einer 100°C heißen und intensiv gerührten Sodalösung gegeben, die aus 147,04 g Na₂CO₃ und 1416 ml destilliertem Wasser hergestellt worden ist. In die frischgefällte Suspension werden 27,76 g Kieselgur eingerührt und die dabei entstehende Mischung wird noch weitere 3 Minuten gerührt. Das Fällprodukt wird anschließend filtriert und mit 70°C heißem Wasser gewaschen, bis der Alkaligehalt des Waschwassers ca. 20 mg Na₂O/l beträgt. Der auf diese Weise erhaltene Filterkuchen wird in 70°C heißem Wasser suspendiert (Mengenverhältnis Filterkuchen zu Wasser = 1 : 1), 60 Minuten gerührt und danach erneut filtriert. Der danach anfallende Filterkuchen wird erneut filtriert. Der hierbei entstehende Filterkuchen wird zu zylinderförmigen Formkörpern (Durchmesser 5 mm, Länge 8 bis 10 mm) extrudiert und anschließend bei steigender Temperatur (50 bis 60°C) mit Luft auf einen Restgehalt an Wasser < 10 Masse-%, bezogen auf getrocknete Masse, getrocknet. Das getrocknete Material wird im Wasserstoffstrom nach vorheriger Inertisierung im Stickstoffstrom (1000 v/v h, 30 min) mit einer Belastung von 400 v/v h und einer Ausheizzeit von 5°C/min auf 470°C hochgeheizt und über einen Zeitraum von 4 h bei dieser Temperatur reduziert. Im getrockneten Zwischenprodukt wurden die Phasen Takovit (Carbonatvariante) und Nickelhydroxysilikat mit Carbonateinbau nachgewiesen. Die Stabilisierung wurde wie in den Beispielen 1 und 2 vorgenommen.

### Beispiel 4 (aus DE 199 09 177 A1 )

2,7 kg Soda wurden in 6 l Wasser aufgeschlämmt und auf 60°C erwärmt. Innerhalb von 30 Minuten wurden unter starkem Rühren 6,6 l einer Lösung von Natriumsilikat mit einem Gehalt von 45 g SiO₂ /l und anschließend 3 l einer Nickelnitratlösung mit einem Gehalt von 150 g Ni/l Lösung innerhalb von 2 h zugegeben. Die Fällsuspension wurde dann 1 h bei 60°C nachgerührt. Danach wurden weitere 3,5 l einer Nickelnitratlösung mit einem Gehalt von 150 g Ni/l Lösung innerhalb von 2 h in die Fällsuspension eingeleitet. Der Niederschlag wurde abfiltriert und mit Wasser gewaschen. Anschließend wurde der Filterkuchen 10 h bei 130°C getrocknet, im Wasserstoffstrom nach vorheriger Calcinierung und Inertisierung, wie im Beispiel 1 beschrieben, 6 h bei 450°C reduziert, nach Inertisierung im Stickstoffstrom (1000 v/v h, 30 min bei 450°C) und nach Abkühlen im Stickstoffstrom unter Einsatz eines 0,1-1 % O₂ enthaltenden Stickstoffstroms (1500 v/v h) bei Temperaturen< 80°C stabilisiert. Die Stabilisierungzeit betrug 8 h. Der reduzierte und stabilisierte Katalysator enthält ca. 62% Nickel und 20% SiO₂. Der Reduktionsgrad des Katalysators beträgt nach einer einstündigen Nachreduktion bei 100°C 75%.

### Beispiel 5 (aus DE 199 09 176 A1 )

4,5 l Wasser werden in einem mit einem Rührer versehenen, beheizbaren Fällbehälter vorgelegt und anschließend eine Metallnitratlösung, die neben 400 g Nickel auch Zirconium in Form einer Zirconylnitratlösung enthält, zugegeben. Das Molverhältnis von Nickel zu ZrO₂ in der Metallnitratlösung ist ca. 6. Nach der Zugabe der Metallnitratlösung wird unter Rühren auf eine Temperatur von 60°C aufgeheizt und anschließend mit einer wäßrigen NaOH-Lösung, die durch Lösen von 600 g* Natriumhydroxid in 8 l Wasser hergestellt wurde, bei Temperaturen von 60°C bis zu einem pH-Wert von 8 bis 8,5 gefällt. Die Fällzeit beträgt 2 Stunden. Im Anschluß an die Fällung wird die Suspension noch ca. 2 Stunden bei obigen Temperaturen nachgerührt, danach filtriert und so lange mit alkalifreiem Wasser gewaschen, bis der Na₂O-Gehalt im Filterkuchen <0,3% bezogen auf den Glührückstand des bei 800° C getemperten Filterkuchens liegt. Anschließend wird der Filterkuchen ca. 15 Stunden bei Temperaturen von 120 bis 150°C getrocknet und bei 350°C calciniert.

Nach der Calcinierung wird das getrocknete Zwischenprodukt gemahlen, tablettiert, im Stickstoffstrom (1000 v/v h) inertisiert, im Wasserstoffstrom (1000 v/v h) mit einer Aufheizrate von 5°C/min auf 450°C hochgeheizt und 6 h bei 450°C reduziert. Anschließend wurde 30 min bei 450°C im Stickstoffstrom mit 1500 v/v h inertisiert, danach im Stickstoffstrom (1500 v/v h) auf 280°C abgekühlt, bei dieser Temperatur wird dem Stickstoff Kohlendioxid in einer solchen Menge zugesetzt, daß die CO₂-Konzentration 2 Vol-% beträgt. Der Katalysator wird mit diesem Gemisch 30 Minuten bei 280°C behandelt, nachfolgend im gleichen Gasgemisch auf 55°C abgekühlt und in einem Stickstoffstrom (1500 v/v h) mit einem Sauerstoffgehalt von 0,1 bis 1 Vol-% und einem CO₂-Gehalt von 0,6 Vol-% bei Temperaturen unterhalb 80°C stabilisiert. Die Sauerstoffkonzentration wurde so gewählt, daß die Katalysatortemperatur 80°C nicht überstieg. Die Stabilisierungszeit bei Temperaturen < 80°C betrug 4 h. Der Reduktionsgrad des Katalysators nach einer einstündigen Nachreduktion bei 100°C beträgt 84%.

Der reduzierte und stabilisierte Katalysator enthält ca. 60% Nickel und 30% ZrO_{z} bezogen auf die Masse des Gesamtkatalysators.

### Beispiel 6 (aus DE 199 09 176 A1)

8 l Wasser und eine Lösung von Natriumsilikat (60 g/l) werden in den beheizbaren Fällbehälter vorgelegt und anschließend unter Rühren eine vereinigte Nickel-Zirconylnitratlösung (Molverhältnis: Nickel/ZrO₂/SiO₂ = 1 : 0,13 : 0,065) zugegeben. Danach wird unter Rühren auf eine Temperatur von 75-80°C aufgeheizt und mit der Fällung unter Zugabe einer wäßrigen Sodalösung (150 g Soda/l Lösung) begonnen. Die Fällung ist beim Erreichen des pH-Wertes von 8-8,5 abgeschlossen. Nach der einstündigen Fällung wird die fertige Fällsuspension noch 2 Stunden nachgerührt und wie im Beispiel 5 beschrieben weiterverarbeitet. Die Calcinierung des getrockneten Materials wurde bei 450°C vorgenommen.

Die weitere Verarbeitung des Fällproduktes wurde wie im Beispiel 5 vorgenommen. Der fertige Katalysator enthält ca. 65% Nickel, 18% ZrO₂ und 3% SiO₂, bezogen auf den Gesamtkatalysator. Er wies eine bimodale Nickelkristallitgrößenverteilung auf. Die Maxima der Kristallitgrößen lagen bei 49 Angström und 112 Angström. Der Anteil an feindispersem Nickel, das heißt Nickel mit Kristallitgrößen von 30 bis 80 Angström, beträgt ca. 54%. Der Katalysator weist nach einer einstündigen Nachreduktion im Wasserstoffstrom (Belastung: 1000 v/v h) bei 100°C einen Reduktionsgrad von 75% auf.

### Beispiel 7 (aus DE 199 09 176 A1)

6 l Wasser werden in den Fällbehälter vorgelegt und anschließend eine Metallnitratlösung, die neben Nickel und Zirconium in Form der Nitrate auch Kieselgur als SiO₂-Träger enthält, zugegeben. Das Molverhältnis von Nickel ZrO₂/SiO₂ in der Metallnitrat/Träger-Suspension betrug 1 : 0,14 : 0,1. Nach dem Erreichen einer Temperatur von 90°C erfolgt die Fällung durch Zugabe einer Natriumbicarbonatlösung, die durch Lösen von 1,35 kg NaHCO₃ in 10 l Wasser hergestellt wurde. Nach Erreichen der Fälltemperatur von 90°C wird mit der Fällung begonnen. Die Fällzeit beträgt 1 Stunde. Nach Erreichen des End-pH-Wertes von 8,5 wird die fertige Fällsuspension noch 2 Stunden bei 90°C gerührt und anschließend wie im Beispiel 5 und 6 weiterverarbeitet. Die Calcinierung des getrockneten Materials wurde bei Temperaturen von 430 bis 450°C durchgeführt. Die Reduktion wurde unter den gleichen Bedingungen wie im Beispiel 5 vorgenommen.

Der fertige Katalysator enthält ca. 60% Nickel, 16% ZrO₂ und 5% SiO₂ bezogen auf den Gesamtkatalysator. Die Maxima der Kristallitgrößen lagen bei 44 Angström und 101 Angström. Der Anteil an feindispersen Nickel, das heißt mit Kristallitgrößen von 30 bis 80 Angström, beträgt ca. 62%.

Der Katalysator weist nach einer einstündigen Nachreduktion im Wasserstoffstrom bei 100°C einen Reduktionsgrad von 81% auf.

### Beispiel 8

### Kapazitätsbestimmung des Leuna-Katalysators 6513 S für die Komponenten O₂, CO und H₂ in N₂

Für die Untersuchung der Adsorptions-/Absorptionsfähigkeit und zur Ermittlung der Adsorptions/Absorptionskapazität des als Adsorptions-/Absorptionsmasse eingesetzten nickelhaltigen Katalysators (Gemisch von metallischem Nickel und Nickeloxid auf einem Siliziumdioxidträger, Gehalt von ca. 68 Masse-% berechnet als Nickel; Handelsname: Leuna-Katalysator Kontakt 6513 S, Hersteller: KataLeuna GmbH Catalysts, Am Haupttor, D-06236 Leuna) wurde als Adsorptionspatrone (Gasdurchflußpatrone) ein Edelstahlrohr mit 47 mm innerem Durchmesser eingesetzt (Füllhöhe: 65 cm; Füllvolumen: 1,128 Liter; Füllmasse/Katalysatormenge: 1,39 kg). Die Durchströmgeschwindigkeit des nicht gefüllten Rohres (Leerrohr) beträgt 25 cm pro Sekunde, das heißt es strömen 1562 l/h Stickstoff durch das Leerrohr. Das Katalysatormaterial besteht aus zylindrischen Extrudaten mit einem Durchmesser und einer Länge von ca. 1,6 mm.

### l. Aktivierung der Katalysatormasse

Vor der ersten Regeneration des Katalysators wurde dieser mit Stickstoffgas (N₂ der Reinheit 6.0) über Nacht bei 150 °C getrocknet. Danach wurde mit 3 % H₂ in N₂;bei einem Durchfluß von 1 m³/h bei 350 °C und einer Gesamtzeit von 10 Stunden (h) regeneriert. Es folgt ein Abkühlen auf 30 °C unter Stickstoff (z.B. Haus-Stickstoff) mit 700 l/h über 14 h (Katalysator verbleibt im Röhrenofen).

### II. CO-Versuch

Auf den "kalten" Katalysator wurde das Gasgemisch 700 ppm CO in N₂ mit 1 m³/h geleitet. Die Gaszusammensetzung wurde anhand von Proben mit einem Gasanalysegerät (z. B. RGA 5) vermessen. Nach insgesamt 19 m³'Gasgemisch war ein H₂-Durchbruch zu beobachten. Es wurden Werte in 10 min. Abstand gemessen: 14, 50, 220, 540, 2000 ppb H₂.

### III. O₂-Versuch

Eine 2. Regeneration erfolgte mit 3 % H₂ in N₂ bei 350 °C mit 1 m³/h über 4 h. Abgekühlt wurde unter Haus-Stickstoff über Nacht bis auf 24 °C Katalysatortemperatur.

Der Versuch wurde mit 1 m³/h Gasdurchsatz begonnen.

Der weitere Versuchsablauf im einzelnen:

| Zeit ab Versuchsstart / min. | Wert O₂ | Temperatur des Katalysators |
|---|---|---|
| 60 | 2,2 ppb | 24 °C |
| 70 | 1,5 ppb | 37 °C |
| 80 | 1,6 ppb | 41 °C |
| 105 | 1,3 ppb | 50 °C |
| 115 | 1,3 ppb | 52 °C |

Danach wurde der Versuch abgebrochen, auf Haus-N₂ umgestellt und nach 225 Minuten nach Versuchsbeginn auf 40 °C abgekühlt. Nach nach 226 Minuten wurde auf 1 % O₂ in N₂ umgeschaltet. Nach 285 Minuten seit Versuchsbeginn wurden 0,7 ppb Sauerstoff im Gasstrom hinter dem Gaspatronenausgang gemessen. Nach 315 Minuten (nach 3,5 m³ Gas-Durchgang) wurde der O₂ -Durchbruch festgestellt. Die Kapazität beträgt somit 25,2 l O₂/kg Katalysatormaterial. Die Katalysatortemperatur lag im gesamten Zeitraum (ab der 225. Minute) bei 40 °C.

### IV. H2-Versuch

Regeneration mit 3 % H₂ in N₂, 4 h lang bei 350 °C mit 1 m³/h Durchsatz. Abkühlung über Nacht auf 20 °C.

Gasgemisch: 2538 ppm H₂ in N₂ wurden über den kalten Katalysator geleitet. H2-Durchbruch nach 4 m³ Entnahmemenge (sofortiger Anstieg des H2-Wertes auf > 10 ppm). Die Kapazität beträgt somit für H₂ 7,3 l/kg Katalysatormaterial.

## Patentansprüche

1. Reinigungsmasse zur Entfernung von Beimengungen eines oder mehrerer Gase aus einem Gas oder kälteverflüssigten Gas, enthaltend Nickel in metallischer und/oder oxidierter Form und eine Trägermasse, wobei der Nickelgehalt, berechnet als Metall, mehr als 5 Massenprozent bezogen auf die Gesamtmasse der Reinigungsmasse beträgt.

2. Reinigungsmasse nach Anspruch 1, **dadurch gekennzeichnet, daß** die Beimengungen Sauerstoff, Wasserstoff, Kohlenmonoxid und/oder Kohlendioxid sind

3. Reinigungsmasse nach Anspruch 1 oder 2, **dadurch gekennzeichnet, daß** die Reinigungsmasse 10 bis 80 Massenprozent Nickel, berechnet als Nickel, aufweist.

4. Reinigungsmasse nach einem der Ansprüche 1 bis 3, **dadurch gekennzeichnet, daß** die Reinigungsmasse 40 bis 70 Massenprozent Nickel, berechnet als Nickel, aufweist.

5. Reinigungsmasse nach einem der Ansprüche 1 bis 4, **dadurch gekennzeichnet, daß** die Trägermasse Oxide von Silizium, Aluminium, Hafnium oder Zirkonium enthält.

6. Reinigungsmasse nach einem der Ansprüche 1 bis 4, **dadurch gekennzeichnet, daß** die Trägermasse aus Siliziumdioxid oder Aluminiumoxid besteht.

7. Reinigungsmasse nach einem der Ansprüche 1 bis 4, **dadurch gekennzeichnet, daß** die Reinigungsmasse aus Nickel in metallischer Form und/oder als Oxid und aus Siliziumdioxid oder Aluminiumoxid besteht.

8. Reinigungsmasse nach einem der Ansprüche 1 bis 7, **dadurch gekennzeichnet, daß** das zu reinigende Gas oder kälteverflüssigte Gas Stickstoff, Helium, Argon, Krypton oder Xenon als Hauptkomponente enthält.

9. Verfahren zur Reinigung von Gas oder kälteverflüssigtem Gas, **dadurch gekennzeichnet, daß** das Gas oder kälteverflüssigtem Gas mit einer Reinigungsmasse nach einem der Ansprüche 1 bis 8 in Kontakt gebracht wird.

10. Verwendung von nickelhaltigen Trägermassen mit einem Nickelgehalt von mindestens 10 Massen-% als Adsorbermasse oder Absorbermasse zur Entfernung von Sauerstoff, Wasserstoff, Kohlenmonoxid und/oder Kohlendioxid aus einem Gas oder aus kälteverflüssigtem Gas.

11. Verwendung einer Reinigungsmasse nach einem der Ansprüche 1 bis 8 zur Nachreinigung von Gas oder kälteverflüssigtem Gas mit Stickstoff, Helium, Argon, Krypton oder Xenon als Hauptkomponente.
